# EUROPÄISCHE PATENTSCHRIFT

(11) **EP 2 292 179 B1**
(45) Veröffentlichungstag und Bekanntmachung des Hinweises auf die Patenterteilung: **03.01.2018**
(21) Anmeldenummer: 10010971.9
(22) Anmeldetag: 23.11.2002
(51) Int. Cl.: A61C 8/00

(54) **Keramisches Dentalimplantat**
Ceramic dental implant
Implant dentaire céramique

(30) Priorität: 30.11.2001 DE 10159683
(43) Veröffentlichungstag der Anmeldung: 09.03.2011
(62) Teilanmeldung aus: 07018155.7
(73) Patentinhaber: Straumann Holding AG, 4002 Basel (CH)
(72) Erfinder: Gahlert, Michael, 80333 München (DE)
(74) Vertreter: Schaad, Balass, Menzl & Partner AG

(56) Entgegenhaltungen:
- WO-A1-01/43658
- DE-U1- 9 420 038
- US-A- 3 672 058
- US-A- 4 799 886
- US-A- 5 362 236
- US-A- 5 642 996
- US-B1- 6 168 435

## Beschreibung

Die Erfindung betrifft ein Dentalimplantat mit einem Verankerurigsteil zur Verankerung im Knochen und mit einem Aufbauteil zur Aufnahme eines zu applizierenden Elementes, wie einem Abutment oder einer Kronen- Brücken- oder Prothesenkonstruktion. Dentalimplantate werden seit mehr als 10 Jahren erfolgreich eingesetzt. Die überwiegende Anzahl der derzeit verwendeten Dentalimplantate bestehen aus Titan, da Titan einen ausreichend niedrigen Elastizitätsmodul und eine relativ große Festigkeit aufweist. Des weiteren ist von besonderer Bedeutung, dass mit Titan als Implantatmaterial bei geeigneter Ausführung der Oberfläche (z.b. Aufrauen durch Sandstrahlen) eine sichere Verbundosteogenese erreicht wird. Dies bedeutet, dass die Titan-Implantate nach dem Erreichen einer Primärstabilität durch Einschrauben in den Knochen innerhalb einer Einheilzeit von etwa 3 bis 4 Monaten sicher verknöchern, so dass ein dauerhafter Verbund zwischen dem in den Knochen eingeschraubten Verankerungsteil und dem Knochen gewährleistet ist. Meist werden hierbei zweiteilige Implantate eingesetzt, wozu es grundsätzlich zwei Möglichkeiten gibt.

Gemäß einem geschlossenen, subgingivalen System, wird das verankerungsteil des Implantates bis auf Knochenkammhöhe versenkt, so dass die Mukoperiostdeoke über dem Implantat vernäht werden kann. Nachteilig ist hierbei die notwendige Zweitoperation am Ende der Einheilphase, um dann ein Aufbauteil und darauf die gewünschte Prothese oder Krone applizieren zu können.

Dagegen kann bei dem offenen, transgingivalen System, bei dem das Verankerungsteil des Implantates bis zu ca. 3 mm oberhalb des Knochenkammes auf Schleimhautniveau versenkt wird, eine Sekundäroperation vermieden werden. Die Wundränder können direkt an die Implantathalspartie adaptiert werden, womit ein primärer Weichgewebeabschluss am Implantat erfolgt.

Eine derartige zweiteilige Implantatkonstruktion für ein offenes transgingivales System wird beispielsweise von der Institut-Straumann AG, Waldenburg/Schweiz unter der Bezeichnung ITI®DENTAL IMPLANT SYSTEM vertrieben. Sowohl das Verankerungsteil oder Primärteil, das transgingival implantiert wird, als auch die zugehörigen Aufbauteile bestehen hierbei aus reinem Titan. Um eine gute Verknöcherung zu gewährleisten, ist die Titanoberfläche entweder grob sandgestrahlt oder aber mit Titan durch thermisches Spritzen beschichtet. Beide Oberflächen gewährleisten eine gute Verknöcherung oder Verbundesteogenese.

Auf das Aufbauteil solcher Implantate werden dann Prothetikelemente, wie etwa Brücken oder Kronen in der Regel unter Zwischenlage von sog. Abutments aufgeschraubt oder zementiert. In jüngster Zeit sind hierfür auch keramische Abutments in der Entwicklung, die auf das Aufbauteil appliziert werden.

Keramische Abutments weisen besondere Vorteile bei der späteren Anpassung der Suprakonstruktion wie Brücken oder Kronen, auf dem Abutment auf. Sie lassen sich einfach beschleifen und ermöglichen einen Aufbau von Konstruktionen nach herkömmlichen, dem Zahnarzt geläufigen Verfahren. Besondere Vorteile weisen keramische Abutments insbesondere infolge der Tatsache auf, dass ihre Farbe der natürlichen zahnfarbe angenähert werden kann. In jüngster zeit sind auch Abutments aus Zirkonoxid in der Entwicklung, die sich durch eine besonders hohe Festigkeit auszeichnen.

Zwar ermöglicht ein derartiges System aus zweiteiligem Implantat mit Verankerungsteil und Aufbauteil, Abutment und darauf applizierter Prothetik eine gute Anpassung an die geometrischen Verhältnisse bei verschiedenen Indikationen, jedoch ist die Vielzahl der beteiligten Komponenten grundsätzlich nachteilig für die mechanische Stabilität des Gesamtsystems. Auch führt jede weitere Verbindung zu möglichen Ansatzpunkte für Bakterien, die im Spalt Parodontitis oder Gingivitis verursachen können.

Aus ästhetischen Gründen wäre es insbesondere im vorderen, sichtbaren Bereich jedoch wünschenswert, alle transgingivalen Teile, auch das Verankerungsteil, aus Keramik herzustellen. Jedoch ist eine Schraubverbindung zwischen Metall (Verankerungsteil aus Titan) und Keramik (Aufbauteil) u.a. aufgrund der unterschiede in den thermischen Ausdehnungskoeffizienten nicht realisierbar. Dagegen konnten sich Verankerungsteile aus Keramik nicht durchsetzen, da diese meist nicht die gewünschte mechanische Stabilität aufweisen.

Zwar stehen in jüngster Zeit auch Zirkonoxidkeramiken zur Verfügung, die eine äußerst hohe Festigkeit aufweisen, insbesondere, wenn die Formkörper heißisostatisch gepresst oder heißisostatisch nachverdichtet sind. Eine derartige Zirkonoxidkeramik, die etwa 92,1 - 93,5 Gew.-% ZrO₂, 4,5 - 5,5 Gew.-% Y₂O₃ und 3,8 - 2,2 Gew.-% HfO₂ aufweist, ist beispielsweise aus der US 6,165,925 bekannt.

Jedoch erscheint ein Einsatz von Zirkonoxidkeramik als Material zur Herstellung des Verankerungsteils eines Implantats nicht möglich, da es für eine ausreichende mechanische Stabilität der Zirkonoxidkeramik notwendig ist, diese hochdicht, praktisch ohne messbare Porosität herzustellen, wobei sich gleichzeitig eine glatte, äußerst harte Oberfläche ergibt.

Ein derartiges Material ist bioinert, so dass keine Verbundosteogenese zu erwarten ist, weshalb dieser Werkstoff als nicht geeignet zur Herstellung des Verankerungsteils eines Implantats angesehen wird.
Aus der DE 195 30 981 A1 ist eine präfabrizierte vollkeramische implantatsuprakonstruktion aus Zircondioxid zum zahnfarbenen Aufbau implantatgetragener artifizieller Kronenstümpfe bekannt. Hierbei werden zwar gewisse Vorteile im Hinblick auf die Ästhetik von Zirkonoxidkeramik und eine ggf. vereinfachte Präparation beim Aufbau der Suprakonstruktion ermöglicht, jedoch weist auch diese Implantatkonstruktion die grundsätzlichen Nachteile auf, die mit mehrteiligen Implantatkonstruktionen verbunden sind. Da das eigentliche Implantat aus Titan besteht, ergeben sich nämlich nach wie vor Probleme im Verbindungsbereich zwischen dem Implantat und der aus Zirkonoxidkeramik bestehenden Suprakonstruktion.

Dokument WO 01/43658 A1 offenbart ein Dentalimplantat mit einem Verankerungsteil zur Verankerung im Knochen und mit einem Aufbauteil zur Aufnahme eines zu applizierenden Elementes, wobei Verankerungsteil und Aufbauteil einstückig aus Ti ausgebildet sind. Das Aufbauteil besitzt eine konische Form und weist eine vertikale Rille auf und das Verankerungsteil ist mit einem Gewindeabschnitt versehen. Das Aufbauteil schließt unmittelbar an das zylindrisch ausgebildete Verankerungsteil an und verläuft in der Verlängerung der Längsachse des Gewindeabschnitts. Der Erfindung liegt somit die Aufgabe zugrunde, die Nachteile des Standes der Technik zu vermeiden und ein verbessertes Dentalimplantat zu schaffen, mit dem eine hohe mechanische Stabilität des Gesamtsystems gewährleistet ist und gleichzeitig die Vorteile von Keramik insbesondere im Sichtbereich genutzt werden können. Ferner soll eine geeignetes Herstellverfahren hierfür angegeben werden.
Diese Aufgabe wird erfindungsgemäß durch ein Dentalimplantat nach Anspruch 1 gelöst. Durch ein verfahren zum Herstellen des Dentalimplantats wird ein Grundkörper mit einem Verankerungsteil zur Verankerung im Knochen und mit einem Aufbauteil zur Aufnahme eines zu applizierenden Elementes einstückig aus einem Werkstoff auf Zirkonoxldbasis bereitgestellt, und anschließend zumindest das Verankerungsteil an seiner Außenoberfläche zumindest teilweise durch ein subtraktives, abtragendes Verfahren vorbehandelt oder mit einer Beschichtung versehen wird, durch die eine verknöcherung unterstützt.

Überraschenderweise hat sich gezeigt, dass auf diese Weise ein einteiliges Dentalimplantat mit einem Verankerungsteil und einem Aufbauteil hergestellt werden kann, das aus einem Werkstoff auf Zirkonoxidbasis besteht und bei dem dennoch eine gute Verknöcherung während der Einheilzeit gewährleistet werden kann.
Als besonderer vorteil ist hierbei die Einteiligkeit des Implantates anzusehen, das kombiniert mit der hohen Festigkeit von Zirkonoxidkeramik eine hohe Stabilität des Gesamtsystems gewährleistet. Gleichzeitig ergibt sich der besondere Vorteil, dass das Aufbauteil der natürlichen Zahnfarbe angenähert ist und somit insbesondere im Sichtbereich die Herstellung von vollkommen natürlich aussehenden keramischen Rekonstruktionen ermöglicht. Auch kann das Aufbauteil unmittelbar beschliffen werden, was eine einfache und vorteilhafte Anpassung der weiteren zu applizierenden Elemente ermöglicht. Auf zusätzliche Abutments kann ggf. verzichtet werden.

Aus der DE 40 12 731 A1 sind zwar grundsätzlich verschiedene Verfahren zur Oberflächenbehandlung von Implantaten bekannt, um eine definierte raue oberfläche zu erzeugen, jedoch ist die Erfindung hierdurch nicht nahegelegt, da sich diese Druckschrift ausschließlich auf die Behandlung metallischer Implantate bezieht und hieraus kein Hinweis entnehmbar ist, der es dem Fachmann nahe legen würde ein einteiliges Implantat auf Zirkonoxidbasis zu entwickeln.

Aus der DE 28 38 759 A1 ist es ferner grundsätzlich bekannt, ein Implantat aus Metall, Kunststoff oder Keramik mit einem Schichtsystem zu versehen, das aus einer passivierenden Schicht und/oder mehreren physiologisch aktiven Schichten besteht. Hierbei wird insbesondere eine passivierende Schicht aus Siliziumnitrid und einer physiologisch aktiven Schicht aus Calciumfluorid, aus α-Alanin, aus Kohlenstoff oder dergleichen mehr in Betracht gezogen.

Jedoch ist auch hierdurch die Erfindung nicht nahegelegt, da sich diese Druckschrift lediglich allgemein mit möglichen Beschichtungen von Implantaten befasst und dem Fachmann keinerlei Hinweise übermittelt werden, ein einteiliges Implantat auf Zirkonoxidbasis zu schaffen.

Vorzugsweise wird das erfindungsgemäße Implantat transgingival eingesetzt. So wird das Weichgewebeattachment mit Ausbildung der biologischen Breite nicht mehr durch einen Zweiteingriff wie bei schleimhautgedeckt einheilenden Systemen gestört. Nach der Implantation wird eine Erstversorgung durch Aufsatz eines Provisoriums unmittelbar auf das Aufbauteil ermöglicht. Hierzu müssen nach Erzielung einer ausreichenden Primärstabilität etwa durch Einschrauben des verankerungsteils in eine Knochenbohrung lediglich Maßnahmen getroffen werden, um insbesondere Scherbewegungen in der folgenden Einheilzeit zu vermeiden. Bei mehreren Implantaten kann dies durch eine Verblockung gewährleistet werden, während dies bei Einzelimplantaten durch eine Fixierung an benachbarten Zähnen oder Prothetikteilen teilweise durch Kleben gewährleistet wird.

Das Verankerungsteil weist einen Gewindeabschnitt auf.
Auf diese Weise kann das erfindungsgemäße Implantat mit der notwendigen Primärstabilität implantiert werden, so dass im Anschluss an die Implantation unmittelbar eine Erstversorgung durch ein Provisorium erzielt werden kann.

Gemäß der Erfindung ist das Verankerungsteil an seiner Außenoberfläche zumindest teilweise durch ein Abtragungsverfahren aufgeraut oder mikrostrukturiert. Durch eine derartige Oberflächenstrukturierung wird gewährleistet, dass das ansonsten bioinerte zirkonoxidmaterial eine Verbundosteogenese mit der Knochensubstanz eingehen kann.

Hierbei ist es für die Erzielung einer guten Verbundosteogenese vorgesehen, dass das erfindungsgemäße Dentalimplantat im Bereich des Verankerungsteils eine maximale Rautiefe zwischen 4 und 20 µm, insbesondere zwischen 4 und 12 µm, besonders bevorzugt zwischen 6 und 12 µm aufweist.
Grundsätzlich kommt hierzu eine Strahlbehandlung, etwa durch Sandstrahlen (mit Korund), durch Strahlen mit Borcarbidpartikeln, oder etwa durch Hochdruck-Wasserstrahlen, in Frage.
Problematisch bei einer derartigen Behandlung ist allerdings die hohe Härte der Zirkonoxidkeramik. Deshalb kann eine deutlich verbesserte Rautiefe etwa durch Verwendung eines harten Materials zum Strahlen, wie etwa Bcrcarbidpartikel, erzielt werden, was allerdings recht teuer ist.
Daher werden alternativ auch chemische Verfahren, insbesondere Ätzverfahren in Betracht gezogen, die teilweise ergänzen als Nachbehandlung zu einer vorherigen mechanischen Behandlung in zur Anwendung kommen können.
Daneben kommen für derartige abtragende Verfahren auch lasergestützte Verfahren in Betracht.
Bevorzugt ist insbesondere zunächst eine Strahlbehandlung, etwa durch Sandstrahlen mit Al₂O₃, und anschließend eine Ätzbehandlung mit Phosphorsäure, Schwefelsäure, Salzsäure oder Mischungen hiervon durchzuführen.

Die Strahlbehandlung kann hierbei etwa mit einem Druck zwischen etwa 1 bar und 10 bar, vorzugsweise zwischen 2 und 6 bar, insbesondere zwischen 3 und 5 bar durchgeführt werden.

Dabei wird insbesondere eine Ätzbehandlung mit Phosphorsäure von 10 bis 90 Vol.-%, vorzugsweise von 15 bis 50 Vol.-%, insbesondere von 20 bis 40 Vol.-% als Nachbehandlung zu einer Strahlbehandlung bevorzugt.

Die Ätzung kann beispielsweise über eine Dauer von 10 Sekunden bis 10 Minuten, vorzugsweise von 10 bis 120 Sekunden, insbesondere von etwa 15 bis 60 Sekunden durchgeführt werden.

An eine Ätzbehandlung schließt sich zweckmäßigerweise ein Reinigungsschritt, etwa durch Spülen in einer NaCl-Lösung und ein anschließendes Spülen in deionisiertem Wasser an.

Mit solchermaßen insbesondere im Bereich des Verankerungsteils vorbehandelten Dentalimplantaten lässt sich eine sichere Verbundosteogenese erzielen.

Gemäß einer weiteren Ausgestaltung der Erfindung ist das Verankerungsteil zumindest teilweise an seiner Außenoberfläche mit einer bioaktiven Beschichtung versehen.

Hierbei kann es sich beispielsweise um eine Silanisierung oder Hydroxylierung handeln, wodurch gleichfalls die Osteogenese unterstützt wird.

Gemäß einer weiteren Ausgestaltung der Erfindung ist das Verankerungsteil zumindest teilweise mit einer metallischen oder keramischen Beschichtung oder mit einer Cermet-Beschichtung versehen.

Auch auf diese Weise kann eine gewisse oberflächenstrukturierung erzeugt werden, um eine Verbundosteogenese zu unterstützen.

Hierbei kann das Verankerungsteil etwa durch thermisches Spritzen, durch CVD oder durch PVD mit einer Beschichtung versehen werden.

Als vorteilhaft wird hierbei insbesondere eine Beschichtung aus Titan oder einer Titanlegierung angesehen, die etwa durch thermisches Spritzen aufgetragen sein kann.

Mit einer derartigen Beschichtung kann die seit Jahren bewährte Biokompatibilität von Titan genutzt werden, um eine sichere Verbundosteogenese des Verankerungsteils während der Einheilphase zu erzielen. Das etwa durch thermisches spritzen aufgetragene Titan weist eine ausreichende Feinstrukturierung auf, um eine Distanzosteogenese zu vermeiden und eine sichere Verknöcherung zu gewährleisten.

Vorzugsweise wird hierbei lediglich der Bereich des Verankerungsteils beschichtet, der bei der Implantation im Knochen versenkt wird. Hierdurch kann die vorteilhafte Ästhetik von Zirkonoxidkeramik im Bereich des Aufbauteil mit der vorteilhaften Biokompatibilität von Titan kombiniert werden.

Das Aufbauteil weist zweckmäßigerweise eine Aufnahme zum Ansatz eines Schraubwerkzeuges auf.

Hierbei kann das Aufbauteil zur formschlüssigen Aufnahme eines Schraubwerkzeuges ausgebildet sein, wie dies grundsätzlich bereits bekannt ist.

Hierbei kann das Aufbauteil etwa an einer Verlängerung des Verankerungsteils ausgebildet sein oder aber gegenüber dem Verankerungsteil abgewinkelt sein.
Gleichfalls kann das Aufbauteil eine kegelstumpfförmige Grundform aufweisen, wodurch eine Klebebefestigung von darauf aufzubauenden Abutments für Prothesekonstruktionen erleichtert wird. Darüber hinaus sind natürlich auch weitere Formen des Aufbautails denkbar, wie z.B. eine quadratische oder hexagonale Form. Gemäß einer weiteren Ausgestaltung der Erfindung wird das Dentalimplantat nach einer vorherigen Aktivierung seiner Oberfläche etwa durch eine silanisierung, Hydroxylierung oder durch eine Ätzbehandlung in einer geeigneten Flüssigkeit, beispielsweise deionisiertem Wasser, oder in einer NaCl-Lösung gelagert, bis es durch den Arzt implantiert wird. Das Dentalimplantat kann somit in einem Behälter, vorzugsweise unter Luftabschluss, gelagert sein.
Auf diese weise wird vermieden, dass die Oberfläche vor dem Einsetzen des Dentalimplantats durch Bestandteile der Luft ihre Aktivierung ganz oder teilweise verliert. So wird eine Osteointegration unterstützt.
Die Herstellung der Zirkonoxidkeramik für das einteilige Dentalimplantat ist grundsätzlich im Stand der Technik bekannt und wird als nicht zur Erfindung gehörend angesehen. Hierzu wird etwa auf die eingangs erwähnte US 6,165,925 verwies en. Eine solchermaßen hergestellte Zirkonoxidkeramik kann beispielsweise durch Schleifen auf die gewünschte Form des Dentalimplantats bearbeitet werden und anschließend an ihrer Oberfläche nachbehandelt werden, um die gewünschte Oberflächenbeschaffenheit zu erzielen.

weitere Merkmale und Vorteile ergeben sich aus der folgenden Beschreibung bevorzugter Beispiele unter Bezugnahme auf die Zeichnung. Es zeigen:
- Fig. 1: eine Ansicht einer ersten Ausführung eines Implantats, welches nicht Teil der Erfindung ist;
- Fig. 2: eine Ansicht einer leicht gegenüber der Ausführung der Fig. 1 abgewandelten Ausführung eines erfindungsgemäßen Implantats;
- Fig. 3: eine Ansicht einer weiteren Ausführung eines Implantats, welches nicht Teil der Erfindung ist, bei dem das Aufbauteil gegenüber dem Verankerungsteil leicht abgewinkelt ist;
- Fig. 4: eine REM-Aufnähme eines Testimplantats, das einem Patienten implantiert wurde und nach einer Einheilzeit von etwa 3 Monaten zusammen mit der umgebenden Knochensubstanz mittels eines Bohrers entfernt wurde.

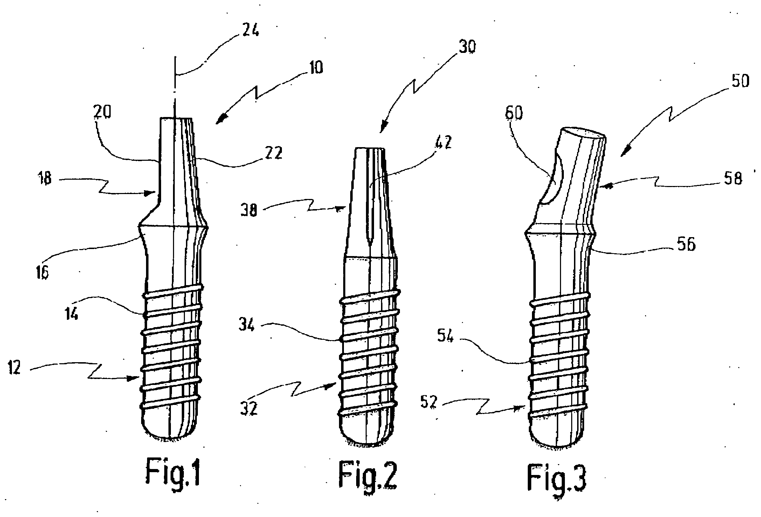

In den Figuren 1 - 3 sind verschiedene mögliche Ausführungsformen eines einteiligen Dentalimplantats dargestellt, ohne dass dies einschränkend bezüglich der Formgestaltung des Implantats zu verstehen ist.

In Fig. 1 ist ein Dentalimplantat insgesamt mit der Ziffer 10 bezeichnet. Es weist ein Verankerungsteil 12 mit einem Gewindeabschnitt 14 und einem abgerundeten unteren Ende auf. Das Verankerungsteil 12 geht an seinem oberen Ende über einen leicht außenkonisch nach außen aufgeweiteten Abschnitt 16 in ein einstückig damit ausgebildetes Aufbauteil 18 auf, das in der Verlängerung der Längsachse 24 des Gewindeabschnitts 14 verläuft. Das Aufbauteil 18 besitzt eine kegelstumpfförmige oder konische Form und ist an einer Seite mit einer Abflachung 20 versehen. An der der Abflachung 20 gegenüberliegenden Seite ist eine Rille 22 in die Außenoberfläche eingeformt, die von der oberen Stirnfläche des Aufbauteils 18 aus nach unten verläuft und in einem konischen Abschnitt endet, der den Anschluss an den Konusabschnitt 16 des Verankerungsteils 12 bildet.

Die Abflachung 20 dient in Verbindung mit der gegenüberliegenden Rille 22 zum formschlüssigen Ansatz eines Schraubwerkzeuges, das eine entsprechend angepasste Steckaufnahme aufweist.

Fig. 2 zeigt eine leicht abgewandelte Ausführung eines insgesamt mit der Ziffer 30 bezeichneten Dentalimplantats, wiederum mit einem Verankerungsteil 32 mit Gewindeabschnitt 34 und einem sich daran anschließenden konischen Aufbauteil 38, an dem die Rille 42 zu sehen ist, da das Dentalimplantat 30 um 90° gegenüber dem Dentaümplantat 10 gemäß Fig. 1 versetzt angeordnet ist.

Im Unterschied zu der Ausführung gemäß Fig. 1 weist das Dentalimplantat 30 keinen konischen Abschnitt im Übergangsbereich zwischen verankerungsteil 32 und Aufbauteil 38 auf. Das Aufbauteil 38 schließt sich vielmehr unmittelbar als konischer Abschnitt an das zylindrisch ausgebildete verankerungsteil 32 an. Auf der der Rille 42 gegenüberliegenden Seite kann wiederum eine entsprechende Abflachung, wie in Fig. 1 zu sehen ist, vorgesehen sein.

In Fig. 3 ist eine abgewandelte Ausführung eines Dentalimplantates insgesamt mit der Ziffer 50 bezeichnet.

Das Dentalimplantat 50 weist ein der Ausführung gemäß Fig. 1 entsprechendes Verankerungsteil 52 mit Gewindeabschnitt 54 auf, das über einen Außenkonusabschnitt 56 in ein Aufbauteil 58 übergeht.

Das Aufbauteil 58 weist zwar wiederum eine konische Rundform auf, ist jedoch gegenüber der Längsachse des Verankerungsteils 52 abgewinkelt, beispielsweise um einen Winkel von etwa 15°, was insbesondere für den Einsatz im Schneidezahnbereich in vielen Fällen sinnvoll ist. Durch eine geeignete Vertiefung 60 an einer Außenfläche des Aufbauteils 58 wird wiederum ein formschlüssiger Ansatz eines Schraubwerkzeuges ermöglicht, um auch dieses Dentalimplantat mit abgewinkeltem Aufbauteil in eine Bohrung des Knochens einschrauben zu können.
Das Verankerungsteil kann beispielsweise eine Axiallänge von 10 mm aufweisen, wobei sich die anderen Dimensionen entsprechend ergeben.
Es versteht sich jedoch, dass die Dimensionierung und Formgebung in Abhängigkeit von der jeweiligen Indikation in geeigneter Weise angepasst werden kann.

Die Dentalimplantate 10, 30, 50 sind einstückig aus einer Zirkonoxidkeramik hergestellt, wobei es sich beispielsweise um eine stabilisierte Zirkonoxidkeramik mit 92,1 bis 93,5 Gew.-% ZrO₂ und 4,5 bis 5,5 Gew.-% Y₂O₃ und 1,8 bis 2,2 Gew.-% HfO₂ gemäß der eingangs genannten US 6,165,925, handeln kann. Eine derartige stabilisierte Zirkonoxidkeramik weist insbesondere bei Herstellung durch heißisostatisches Pressen oder durch Sintern mit anschließender heißisostatischer Nachverdichtung eine außerordentlich hohe mechanische Stabilität und Festigkeit auf. Auch die Verwendung beliebiger anderer Zirkonoxidkeramiken ist denkbar.
Das Verankerungsteil ist durch eine geeignete abtragende Vorbehandlung oder durch eine geeignete Beschichtung an seiner Außenoberfläche bebandelt, um so eine gute Verbundosteogenese nach der Implantation zu erreichen. Das Verankerungsteil kann beispielsweise an seiner Oberfläche silanisiert oder hydroxyliert sein, oder durch ein Abtragungsverfahren aufgeraut oder mikrostrukturiert sein.

Durch eine Beschichtung, die vorzugsweise durch thermisches Spritzen mit einer Schichtdicke vorzugsweise im Bereich zwischen etwa 20 und 100 µm aufgetragen wird, kann gleichfalls eine Verbundosteogenese erzielt werden.

Neben Keramikbeschichtungen etwa aus Zirkonoxid, Aluminiumoxid, Siliziumoxid oder Mischungen hieraus mit gegebenenfalls weiteren Anteilen ist insbesondere eine Beschichtung mit Reintitan mit einer Schichtdicke zwischen etwa 20 und 100 µm durch thermisches Spritzen bevorzugt.

Es empfiehlt sich, vor dem Aufspritzen der Beschichtung etwa im Plasmaspritzverfahren, eine geeignete Vorbehandlung der Oberfläche durchzuführen, um durch eine ausreichende Rauhigkeit eine gute Haftung der Beschichtung sicherzustellen, z.B. durch eine Strahlbehandlung oder Ätzbehandlung.

Durch eine dünne, thermisch gespritzte Beschichtung insbesondere mit Titan lediglich im Bereich des Verankerungsteils (außerhalb des Sichtbereiches) wird eine sichere verbundosteogenesa. im Verlaufe der Einheilzeit erzielt, wobei gleichzeitig die Vorteile der Zirkonoxidkeramik, wie Beschleifbarkeit und an den natürlichen Zahn angenäherte Färbung genutzt werden können.

Durch erste Feldversuche wurde nachgewiesen, dass auch ein einteiliges Zirkonoxid-Implantat, dessen Außenoberfläche lediglich einer geeigneten abtragenden Behandlung unterzogen wurde, eine Verbundosteogenese gewährleisten kann.

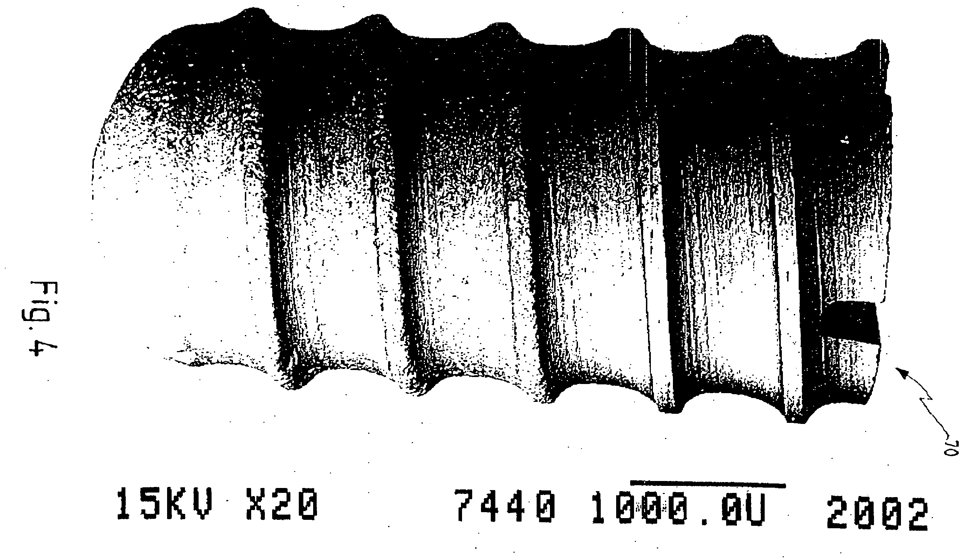

Hierzu wurden Testimplantat gemäß Fig. 4 aus einer Zirkonoxidkeramik gemäß der zuvor genannten US 6,165,925 hergestellt und durch Schleifen auf die Form gemäß Fig. 4 bearbeitet.

Die Oberfläche wurde anschließend mit einem Strahldruck von 4 bar mit Korund sandgestrahlt. Dabei ergab sich eine maximale Rautiefe von 6,4 µm bei einer durchschnittlichen Rautiefe von 4,7 µm. Das in Fig. 4 dargestellte Testimplantat 70 wurde einem Patienten implantiert. Nach einer Einheilzeit von etwa 3 Monaten wurde das Testimplantat mit Hilfe eines Hohlbohrers zusammen mit einem geringen Anteil der umgebenden Knochensubstanz wieder entfernt und histologisch auf die Osteointegration untersucht. Es zeigte sich, dass eine Verbundosteogenese erreichbar ist.

Zusätzliche Verbesserungen im Hinblick auf eine Verbundosteogenese schon nach kurzer Einheilzeit werden insbesondere durch größere Rautiefen in der Größenordnung von etwa 5 bis 15 µm Rₘₐₓ erwartet, wozu insbesondere eine Nachbehandlung der gestrahlten Oberfläche durch Ätzen mit Phosphorsäure in Betracht gezogen wird. Beispielsweise durch ein Ätzen mit 30-prozentiger Phosphorsäure über eine Dauer von 30 Sekunden mit anschließender spülung zunächst mit NaCl-Lösung und dann mit deionisiertem Wasser lässt sich die Rautiefe auf etwa 5 bis 15 µm Rₘₐₓ vergrö-βern (insbesondere etwa 8 bis 12 µm, je nach der vorherigen Strahlbehandlung).

Zusätzlich unterstützt die durch Ätzen erzielte Aktivierung der Oberfläche eine Osteointegration. Um diese Aktivierung bis zur Implantation zur erhalten, ist es ferner bevorzugt, das Implantat bis zur Implantation durch den Arzt unmittelbar nach der Ätz- und Spülberiandlung in einer geeigneten Flüssigkeit, wie etwa deionisiertem Wasser, zu lagern. Auf diese Weise wird vermieden, dass die Oberfläche vor dem Einsetzen des Dentalimplantats durch Bestandteile der Luft ihre Aktivierung ganz oder teilweise verliert.

## Patentansprüche

1. Dentalimplantat mit einem Verankerungsteil (32) zur Verankerung im Knochen und mit einem Aufbauteil (38) zur Aufnahme eines zu applizierenden Elementes, wobei Verankerungsteil (32) und Aufbauteil (38) einstückig aus einer Zirkonoxidkeramik ausgebildet sind, wobei das Aufbauteil (38) eine konische Form besitzt und eine Rille (42) aufweiset, die von der oberen Stirnfläche des Aufbauteils (18) aus nach unten verläuft und sich das Aufbauteil (38) unmittelbar an das zylindrisch ausgebildete Verankerungsteil (32) anschliesst, wobei das Verankerungsteil (32) einen Gewindeabschnitt (34) aufweist, und das Aufbauteil (18) in der Verlängerung der Längsachse (24) des Gewindeabschnitts (34) verläuft und wobei das Verankerungsteil (32) an seiner Aussenoberfläche zumindest teilsweise durch ein Abtragungsverfahren aufgeraut ist, und die maximale Rautiefe im Bereich des Verankerungsteifs zwischen 4 und 20 µm liegt.

2. Dentalimplantat nach Anspruch 1, dadurch gekenntzeichnet, dass die der Rille (42) gegenübertiegerzde Seite eine Abflachung aufweist.

## Claims

1. Dental implant with an anchoring part (32) for anchoring in the bone and with a mounting part (38) for receiving an element to be applied, wherein the anchoring part (32) and the mounting part (38) are integrally made of zirconia ceramic, wherein the mounting part (38) has a conical shape and a groove (42), which extends from the upper front surface of the mounting part (18) downwards, and the mounting part (38) directly adjoins the anchoring part (32) which is shaped cylindrically, wherein the anchoring part (32) has a threaded section (34), and the mounting part (18) extends within the extension of the longitudinal axis (24) of the threaded section (34), and wherein the anchoring part (32) is at least partially roughened at its outer surface by a removing process, and the maximum surface roughness in the region of the anchoring part is between 4 and 20 µm.

2. Dental implant according to claim 1, **characterized in that** the side opposite the groove (42) has a flattening (20).

## Revendications

1. Implant dentaire, comprenant une partie d'ancrage (32) à ancrer dans l'os et une partie d'assemblage (38) pour recevoir un élément à appliquer, la partie d'ancrage (32) et la partie d'assemblage (38) étant réalisées d'une seule pièce à partir d'une céramique en zircone, la partie d'assemblage (38) possédant une forme conique et présentant une rainure (42) qui s'étend de la face frontale supérieure de la partie d'assemblage (18) vers le bas, et la partie d'assemblage (38) se raccordant directement avec la partie d'ancrage (32) de forme cylindrique, la partie d'ancrage (32) présentant une portion filetée (34), et la partie d'assemblage (18) s'étendant dans le prolongement de l'axe longitudinal (24) de la portion filetée (34), et la partie d'ancrage (32) étant rendue sur sa surface extérieure au moins partiellement rugueuse par un procédé d'enlèvement, et la profondeur de rugosité maximale dans la région de la partie d'ancrage étant entre 4 et 20 µm.

2. Implant dentaire selon la revendication 1, **caractérisé en ce que** le côté opposé à la rainure (42) présente un méplat (20).
